# NOUVEAU FASCICULE DE BREVET EUROPEEN

(11) **EP 1 461 507 B2**
(45) Date de publication et mention de la décision concernant l'opposition: **17.06.2009**
(45) Mention de la délivrance du brevet: 16.08.2006
(21) Numéro de dépôt: 02799130.6
(22) Date de dépôt: 31.12.2002
(51) Int. Cl.: E05F 15/04

(54) **DISPOSITIF ADAPTE A COMMANDER L'OUVERTURE ET LA FERMETURE D'UN CAPOT DE COFFRE**
VORRICHTUNG ZUR STEUERUNG DER ÖFFNUNG BZW. SCHLIESSUNG EINES HECKDECKELS
DEVICE FOR CONTROLLING THE OPENING AND CLOSING OF A TRUNK HOOD

(30) Priorité: 04.01.2002 FR 0200104
(43) Date de publication de la demande: 29.09.2004
(73) Titulaire: Société Européenne de Brevets Automobiles, 75011 Paris (FR)
(72) Inventeur: QUEVEAU, Gérard, F-79140 Le Pin (FR); QUEVEAU, Paul, F-79140 Montravers (FR); GUILLEZ, Jean-Marc, F-79140 Cirières (FR)
(74) Mandataire: Pichat, Thierry
(86) Numéro de dépôt international: PCT/FR2002/004591
(87) Numéro de publication internationale: WO 2003/060270

(56) Documents cités:
- DE-A- 3 313 310
- DE-A- 19 927 871
- DE-C- 19 641 428
- US-A- 5 986 420

## Description

La présente invention concerne un dispositif adapté à commander l'ouverture et la fermeture d'un capot de coffre de véhicule, notamment de coffre à bagages.

On connaît un dispositif adapté à commander l'ouverture et la fermeture d'un capot de coffre du type comprenant un vérin dont le cylindre est relié de façon pivotante à la carrosserie du véhicule et dont la tige coulissante dans le cylindre est reliée au capot de façon articulée par son extrémité libre.

Un tel dispositif est connu du document US 5 986 420, qui correspond au préambule de la revendication 1.

Un inconvénient d'un dispositif adapté à commander la fermeture automatique d'un capot est qu'une personne voulant déposer ou saisir rapidement un bagage situé dans le coffre peut se faire pincer. Il en est de même si une personne place par inadvertance ses mains à proximité immédiate du coffre.

Un autre inconvénient d'un tel dispositif adapté à commander la fermeture automatique d'un capot est qu'un bagage mal positionné dans le coffre peut gêner la fermeture du capot et entraîner soit la détérioration du dispositif, soit celle du bagage.

Certains utilisateurs ont besoin d'être rassurés sur le fait que la fermeture automatique du capot n'entraînera aucune détérioration du dispositif de fermeture ou des bagages mal positionnés, même si le capot est équipé le cas échéant d'un dispositif apte à empêcher la continuation du mouvement de fermeture en cas de gêne de la fermeture par un bagage.

Le but de l'invention est de réaliser un dispositif adapté à commander l'ouverture et la fermeture d'un capot de manière sécurisé qui donne l'impression à l'utilisateur de fermer manuellement le capot, bien que la fermeture soit automatique.

Le dispositif de la revendication 1 comprend un organe de contrôle disposé entre le capot et l'extrémité libre de la tige, et adapté à détecter une force dans le sens de la fermeture du capot et à commander l'activation du vérin dans le sens de la fermeture du capot.

Ainsi, l'utilisateur qui désire refermer le capot sur le coffre impose une force sur celui-ci dans le sens de la fermeture. L'organe de contrôle détecte cette force et, en réponse à cette détection, commande l'activation du vérin dans le sens de la fermeture du capot. De cette façon, l'utilisateur contrôle directement la fermeture du capot en accompagnant le mouvement de fermeture généré par le vérin. Il a l'impression de fermer lui-même le capot.

D'autres particularités de la présente invention ressortiront de la description qui va suivre.

Aux dessins annexés, donnés à titre d'exemples non limitatifs,
- la figure 1 représente une vue schématique en coupe d'un dispositif selon un mode de réalisation de la présente invention, et
- la figure 2 représente un agrandissement de la région II illustrée à la figure 1, représentant un mode de réalisation d'un organe de contrôle du dispositif de la figure 1.

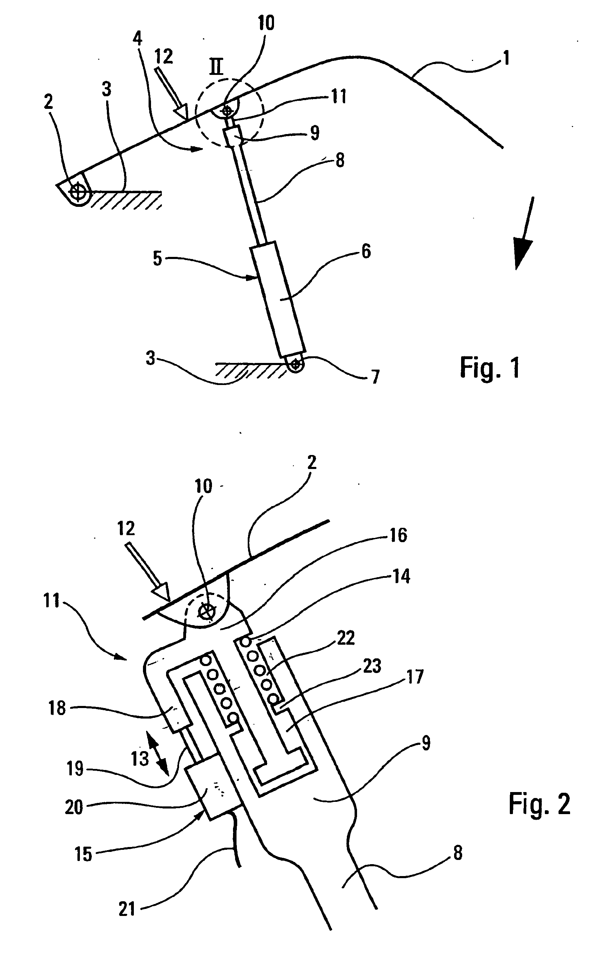

Un capot 1 est relié de façon articulée autour d'un axe de rotation 2 à une carrosserie schématisée en 3 d'un véhicule entre une position ouverte représentée à la figure 1 et une position fermée. Le véhicule comprend un dispositif 4 qui est adapté à commander l'ouverture et la fermeture du capot 1 et qui comprend un vérin 5. Le vérin 5 est un vérin à double effet d'un type connu quelconque.

De façon connue, comme illustré à la figure 1, le vérin 5 comprend un cylindre 6 qui est relié de façon pivotante à la carrosserie 3 selon un axe de pivotement 7, et une tige 8 qui est montée coulissante dans le cylindre 6 et qui est reliée, par son extrémité libre 9, au capot 1 de façon articulée autour d'un second axe de pivotement 10.

Selon la présente invention, le dispositif 4 adapté à commander l'ouverture et la fermeture du capot 1 comprend un organe de contrôle 11.

Comme illustré à la figure 2, l'organe de contrôle 11 est disposé entre le capot 1 et l'extrémité libre 9 de la tige 8. L'organe 11 est adapté à détecter une force 12 exercée sur le capot 1 dans le sens de la fermeture du capot 1 et à commander l'activation du vérin 5 dans le sens de la fermeture du capot 1.

Dans l'exemple illustré à la figure 2, l'organe de contrôle 11 est relié d'une part à l'extrémité libre 9 de la tige 8 de façon déformable en translation (représentée par la double flèche 13) sensiblement dans la direction longitudinale de la tige 8 entre une position éloignée et une position rapprochée, et d'autre part au capot 1 de façon pivotante autour du second axe de pivotement 10.

L'organe de contrôle 11 comprend un élément 14 qui est adapté à solliciter en permanence le capot 1 vers sa position éloignée de l'extrémité libre 9 de la tige 8 de façon à compenser sensiblement le poids du capot 1. De ce fait, seule une force 12 exercée sur le capot 1 permet de faire passer le capot 1 dans une position rapprochée.

L'organe de contrôle 11 comprend aussi un contacteur 15 qui est adapté à détecter une position rapprochée du capot 1 et à commander l'activation du vérin 5 dans le sens de la fermeture du capot 1.

L'organe de contrôle 11 comprend un élément coulissant 16 qui coulisse par rapport à la tige 8 du vérin 5. Plus précisément l'élément coulissant 16 coulisse dans une chambre 17 réalisée à l'extrémité libre 9 de la tige 8 entre une position escamotée dans la tige 8, représentée à la figure 2, dans laquelle le capot 1 est dans une position rapprochée de l'extrémité libre 9, et une position déployée dans laquelle le capot 1 est dans sa position éloignée de l'extrémité libre 9.

Dans l'exemple illustré à la figure 2, l'élément 14 élastique est un ressort de compression 14 disposé dans un logement 22 et sollicitant en permanence l'élément coulissant 16 dans sa position déployée hors de la chambre 17. Le logement 22 est séparé de la chambre 17 par une cloison 23 traversée par l'élément coulissant 16 et contre laquelle le ressort 14 vient prendre appui par une de ses extrémités (l'autre extrémité étant en butée contre l'élément coulissant 16).

De façon à activer le contacteur 15, l'élément coulissant 16 comprend un ergot 18 apte à activer le contacteur 15 quand l'élément coulissant 16 est dans une position escamotée. Le contacteur 15 comprend une règle 19 coulissante dans un boîtier 20 qui est solidarisé à l'extrémité libre 9 de la tige 8. Le contacteur 15 est relié électriquement par un câble 21 à des moyens d'actionnement du vérin 5 dans le sens de la fermeture du capot 1, ces moyens d'actionnement mécanisme étant des moyens connus quelconques, par exemple une centrale hydraulique.

L'utilisateur voulant fermer le capot 1 exerce sur celui-ci une force 12 dans le sens de la fermeture qui agit à l'encontre du ressort 14. Le capot 1 atteint une position rapprochée de l'extrémité libre 9 de la tige 8 et, en parallèle, l'élément coulissant 16 atteint une position escamotée dans laquelle l'ergot 18 entraîne le coulissement de la règle 19. Suite à l'activation du contacteur 15, le mouvement du vérin 5 dans le sens de la fermeture du capot 1 est généré.

Chaque fois que l'utilisateur n'exerce plus de force 12 dans le sens de la fermeture du capot 1, le ressort 14 dirige l'élément coulissant 16 dans sa position déployée, ce qui désactive le connecteur 15 et arrête le mouvement de fermeture du vérin 5. Chaque nouvelle force 12 réactive le contacteur 15 et entraîne la fermeture de capot 1.

On a ainsi ,un dispositif permettant une fermeture assistée du capot 1 du coffre à bagage.

Bien entendu, la présente invention n'est pas limitée au mode de réalisation que l'on vient de décrire, et on peut effectuer sur celui-ci de nombreux changements et modifications sans sortir du cadre de l'invention.

Par exemple, l'organe de contrôle 11 pourrait être relié d'une part au capot 1 de façon mobile en translation entre une position éloignée et une position rapprochée, et d'autre part à l'extrémité libre 9 de la tige 8 de façon articulée autour du second axe de pivotement 10.

Tout organe de contrôle 11 disposé entre le capot 1 et l'extrémité libre 9 de la tige 8 et adapté à détecter une force 12 exercée sur le capot 1 dans le sens de la fermeture du capot et à commander l'activation du vérin 5 dans le sens de la fermeture du capot 1 convient pour réaliser la présente invention, et il pourrait être constitué, par exemple, par un élément piezoélectrique ou un élément hydraulique ou un élément électromagnétique.

## Revendications

1. Dispositif (4) adapté à commander l'ouverture et la fermeture d'un capot (1) de coffre de véhicule, le dispositif (4) comprenant un vérin (5) dont le cylindre (6) est relié de façon pivotante à la carrosserie (3) du véhicule et dont la tige (8), coulissante dans le cylindre (6), est reliée au capot (1) de façon articulée par son extrémité libre (9), tel que le dispositif (4) comprend un organe de contrôle (11) adapté à détecter une force (12) dans le sens de la fermeture du capot (1) et à commander l'activation du vérin (5) dans le sens de la fermeture du capot (1), **caractérisé en ce que** l'organe de contrôle (11) est disposé entre l'extrémité libre (9) de la tige (8) et le capot (1) qui est mobile entre une position éloignée de l'extrémité libre (9) et une position rapprochée de l'extrémité libre (9) atteinte consécutivement à l'application de ladite force (12), l'organe de contrôle (11) comprenant, d'une part, un élément (14) adapté à solliciter en permanence le capot (1) vers sa position éloignée de l'extrémité libre (9) de façon à compenser sensiblement le poids du capot (1), et, d'autre part, un contacteur (15) qui, quand le capot (1) est dans sa position rapprochée de l'extrémité libre (9), est dans un état activé dans lequel il commande l'activation du vérin (5) dans le sens de la fermeture du capot (1), et, quand le capot (1) est dans sa position éloignée de l'extrémité libre (9), est dans son état désactivé dans lequel il commande l'arrêt du mouvement de fermeture du capot (1).

2. Dispositif (4) selon la revendication 1, **caractérisé en ce que** l'organe de contrôle (11) est relié, d'une part, à l'extrémité libre (9) de la tige (8) de façon déformable en translation sensiblement dans la direction longitudinale de la tige (8) entre la position éloignée et la position rapprochée et, d'autre part, au capot (1) de façon pivotante autour d'un axe de pivotement (10).

3. Dispositif (4) selon la revendication 2, **caractérisé en ce que** l'organe de contrôle (11) comprend un élément coulissant (16) adapté à coulisser par rapport à l'extrémité libre (9) de la tige (8) entre une position escamotée dans laquelle le capot (1) est dans sa position rapprochée de l'extrémité libre (9) et une position déployée dans laquelle le capot (1) est dans sa position éloignée de l'extrémité libre (9).

4. Dispositif (4) selon la revendication 3, **caractérisé en ce que** l'élément élastique (14) est un ressort de compression (14) disposé entre l'élément coulissant (16) et la tige (8).

5. Dispositif (4) selon la revendication 3 ou 4**, caractérisé en ce que** l'élément coulissant (16) comprend un ergot (18) apte à activer le contacteur (15) quand l'élément coulissant (16) est dans une position escamotée.

## Claims

1. Device (4) for controlling the opening and closing of a vehicle trunk hood (1), said device (4) comprising a jack (5) the cylinder (6) of which is pivotally linked to the vehicle bodywork (3), and of which the rod (8), sliding in the cylinder (6), is linked to the hood (1) in an articulated manner by its free end (9), wherein the device, comprises a control member (11) for detecting a force (12) in the hood (1) closing direction and controlling activation of the jack (5) in the hood (1) closing direction, **characterised in that** the control member (11) is placed between the free end (9) of the rod (8) and the hood (1) which is movable between a position remote from the free end (9) and a position close to the free end (9) reached after application of said force (12), the control member (11) comprising, on the one hand, an element (14) for permanently urging the hood (1) towards its position remote from the free end (9) so as to substantially compensate the weight of the hood (1), and, on the other hand, a contact switch (15) which, when the hood is in its position close to the free end (9), is in an activated state in which it controls activation of the cylinder (5) in the hood closing direction, and, when the hood is in its position remote from the free end (9), is in its deactivated state in which it controls stopping the hood closing movement.

2. Device (4) according to claim 1, **characterised in that** the control member (11) is linked, on the one hand, to the free end (9) of the rod (8) deformably in translation substantially along the longitudinal direction of the rod (8) between the remote position and the close position, and, on the other hand, to the hood (1) in a pivotal manner about a pivot pin (10).

3. Device according to claim 2, **characterised in that** the control member (11) comprises a sliding element (16) that slides with respect to the free end (9) of the rod (8) between a retracted position, in which the hood (1) is in its position close to the free end (9), and an extended position in which the hood (1) is in its position remote from the free end (9).

4. Device according to claim 3, **characterised in that** the elastic element (14) is a compression spring (14) placed between the sliding element (16) and the rod (8).

5. Device according to claim 3 or 4, **characterised in that** the sliding element (16) comprises a pin (18) for activating the contact switch (15) when the sliding element (16) is in a retracted position.

## Patentansprüche

1. Vorrichtung (4), die das Öffnen und Schließen eines Heckdeckels (1) eines Fahrzeugs steuern kann, wobei die Vorrichtung (4) ein Stellglied (5) aufweist, dessen Zylinder (6) auf drehbare Weise mit der Karosserie (3) des Fahrzeugs verbunden ist und dessen im Zylinder (6) gleitende Stange (8) über ihr freies Ende (9) auf drehbare Weise mit dem Deckel (1) verbunden ist, wobei die Vorrichtung (4) ein Steuerelement (11) aufweist, das eine Kraft (12) in Richtung des Schließens des Deckels (1) detektieren kann und die Aktivierung des Stellglieds (5) in Richtung des Schließens des Deckels (1) steuern kann, **dadurch gekennzeichnet, dass** das Steuerelement (11) zwischen dem freien Ende (9) der Stange (8) und dem Deckel (1), angeordnet ist, der zwischen einer von dem freien Ende (9) entfernten Position und einer an dem freien Ende (9) angenäherten Position, die nach der Aktivierung dieser Kraft (12) erreicht wird, beweglich ist, wobei das Steuerelement (11) einerseits ein Element (14) der um kontinuierlich den Deckel (1) nach seiner von dem freien Ende (9) entfernten Position zu drücken geeignet ist, um in wesentlichen das Gewicht des Deckels (1) zu kompensieren, andererseits einem Kontaktschalter (15) aufweist, der, wenn der Deckel (1) in seiner an dem freien Ende (9) angenäherten Position ist, in einem aktivierten Zustand ist, in welchem er die Aktivierung des Stellglieds (5) in Richtung des Schließens des Deckels (1) steuert, und wenn der Deckel (1) in seiner von dem freien Ende (9) entfernten Position ist, in seinem desaktivierten Zustand ist, in welchem er die Rast der Deckelschliessenbewegung steuert.

2. Vorrichtung (4) nach Anspruch 1, **dadurch gekennzeichnet, dass** das Steuerelement (11) einerseits auf eine im wesentlichen in Längsrichtung der Stange (8) zwischen der entfernten Position und der angenäherten Position translationsverformbare Weise mit dem freien Ende (9) der Stange (8) und andererseits auf eine um eine Drehachse (10) drehbare Weise mit dem Deckel (1) verbunden ist.

3. Vorrichtung nach Anspruch 2, **dadurch gekennzeichnet, dass** das Steuerelement (11) ein Gleitelement (16) aufweist, das bezüglich des freien Endes (9) der Stange (8) zwischen einer eingefahrenen Position, in welcher der Deckel (1) in seiner an das freie Ende (9) angenäherten Position ist, und einer aufgefahrenen Position, in welcher der Deckel (1) in seiner vom freien Ende (9) entfernten Position ist, gleiten kann.

4. Vorrichtung nach Anspruch 3, **dadurch gekennzeichnet, dass** das elastische Element (14) ein Kompressionsfeder (14) ist, das zwischen dem Gleitelement (16) und der Stange angeordnet ist.

5. Vorrichtung nach Anspruch 3 oder 4, **dadurch gekennzeichnet, dass** das Gleitelement (16) einen Nocken (18) aufweist, der in der Lage ist, den Kontaktschalter (15) zu aktivieren, wenn das Gleitelement (16) in einer eingefahrenen Position ist.
